# EUROPEAN PATENT APPLICATION

(11) **EP 1 505 477 A2**
(43) Date of publication of application: **09.02.2005**
(21) Application number: 04254636.6
(22) Date of filing: 02.08.2004
(51) Int. Cl.: G06F 1/00

(54) **Control of programming electronic devices**

(30) Priority: 05.08.2003 US 634934
(71) Applicant: Xerox Corporation, Rochester, New York 14644 (US)
(72) Inventor: Rodriguez, Alberto, Webster, NY 14580 (US); Bell, Scott J., Webster, NY 14580 (US); Rommelmann, Heiko, Penfield, NY 14526 (US); Phipps, William H., Fairport, NY 14450 (US); Boucher, Ronald P., Rochester, NY 14623 (US)
(74) Representative: Skone James, Robert Edmund

(57) **Abstract**

Security for a system and process for programming electronic devices (34), such as electronic monitors for replaceable modules for a printing apparatus is provided by combinations of the elements controlling the installation of device programming software onto the programming system (10) by verifying installation permissions and installing the programming software only if the installation permissions are verified. In addition, refilling the programming system with new or additional programming permissions is controlled by verifying refill permissions by reading installation card information from an installation security card and electronically verifying that the installation card information contains a predetermined installation security code. Programming electronic devices is controlled by determining if programming an electronic device is within a programming permissions of the programming system, detecting the presence of an electronic device to be programmed, and programming the electronic device only if programming an electronic device is within the programming permissions of the programming system.

## Description

The present invention pertains to programming electronic devices, and particularly to controlling or policing the programming of electronic devices to prevent the unauthorized programming of such devices.

Electronic tracking devices are used on a variety of apparatus to perform functions such as tracking the usage of the apparatus, and ensuring that correct modules or components are used in or with the apparatus. In one environment, electronic tracking devices are attached to replaceable modules of a printing apparatus. The replaceable modules for a printing apparatus may include modules such as containers of marking material (ink or toner), imaging elements (i.e., photoreceptor drums), fuser elements, etc.

In accordance with one aspect of the present invention, a method of programming one or more electronic devices with device information comprises:
installing device programming software onto a programming system, wherein the installing comprises:
   verifying installation permissions; and
   installing programming software onto the programming system only if the installation permissions are verified;
refilling the programming system with programming permissions, wherein the refilling comprises:
   verifying refill permissions; and
   establishing predetermined programming permissions in the programming system only if the refill permissions are verified; and
programming electronic devices, wherein the programming comprises:
   determining if programming an electronic device is within the programming permissions of the programming system;
   detecting the presence of an electronic device to be programmed; and
   if programming an electronic device is within the programming permissions and an electronic device is present, using the programming software to program device information onto the electronic device.

The programming permissions may include an authorized programming count, the method comprising determining if the programming is within the programming permissions includes determining if the programming system has already programmed a number of devices at least equal to the authorized programming count.

In accordance with a second aspect of the present invention, a programming system for programming electronic printer module tracking devices comprises:
a security card reader for receiving a security card;
a programmed computer;
wherein the security card reader is connected to the programmed computer; and
a device programmer connected to the programmed computer for programming electronic devices with device information in response to instructions from the programmed computer;
wherein the programmed computer is programmed with programming permissions that include a maximum number of electronic devices into which the programmed computer is authorized to program the device information;
wherein the programmed computer is programmed to receive a refill file to refill the maximum number of electronic devices that the programming system is permitted to program through the device programmer; and
wherein the programmed computer is programmed to install the refill file only if the security card presented to the security card reader contains authorized refill permissions.

In accordance with additional aspects of the invention, establishing the programming permissions includes establishing the programming permissions at multiple storage locations within the programming system, and examining the programming permissions at all such storage locations prior to programming an electronic device. In accordance with yet another aspect of the invention, establishing the programming permissions includes encrypting the programming permissions. In yet another aspect of the present invention, verifying the refill permissions prior to refilling the programming system with programming permissions includes reading refill card information from a refill security card presented to a card reader attached to the system, electronically verifying that the refill card information contains a predetermined refill security code, entering a refill password into the programming system, and verifying in the programming system the refill password.

An example of a method and system according to the present invention will now be described with reference to the accompanying drawings, in which:-
Figure 1 is a conceptual illustration of components of a programming system in accordance with an aspect of the present invention;
Figure 2 is a flow chart of the process of installing the programming software in accordance with an aspect of the present invention;
Figure 3 is a flow chart diagram of the process of verifying refill permissions and establishing programming permissions in accordance with another aspect of the present invention;
Figure 4 is a flow chart diagram of a portion of the process of verifying programming permissions in accordance with an aspect of the present invention;
Figure 5 is a flow chart diagram of a portion of the process of programming an electronic device, and verifying the currency of programming permissions in the programming systems in accordance with an aspect of the present invention;
Figure 6 is a flow chart illustrating an alternative portion of the process of verifying programming permissions and programming electronic devices in accordance with an aspect of the present invention; and,
Figure 7 is a flow chart diagram of a portion of a process of auditing the device information programmed into a particular electronic device.

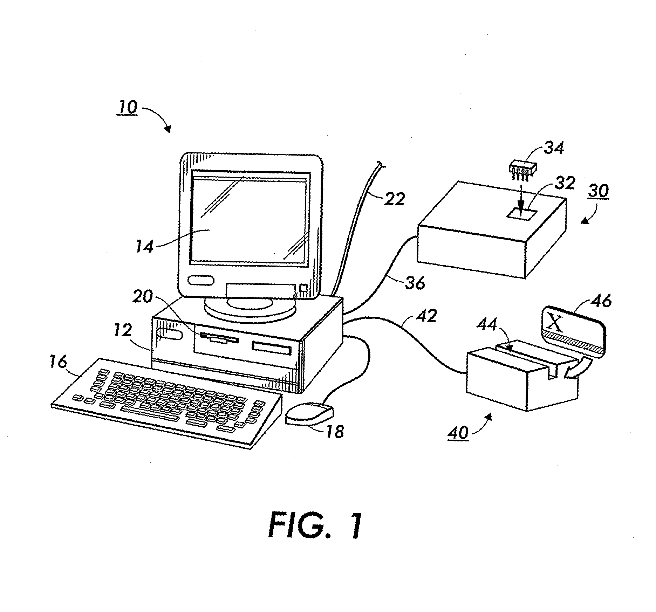

Figure 1 shows stylistically an exemplary programming system for programming electronic devices in accordance with an aspect of the present invention. The programming system includes a programmed general purpose computer 10 that includes a central processing unit 12 and user interface elements, such as a display 14, an input device such as a keyboard 16 and/or mouse 18. The computer can additionally include one or more removable media drives 20 for receiving removable media, such as a floppy disk, a compact disk (CD), or a digital versatile disk (DVD). The computer may also include one or more external communication elements, such as a cable 22 for connecting to a computer network, or to the Internet. The external communication element may include an antenna for wireless communication with a local network or with remote components or systems.

The programming system also includes a device programmer 30 that includes a receptacle or other receiving space 32 for an electronic tracking device 34 that is to be programmed with particular tracking device information. The device programmer 30 is connected to the programmed computer 10 through a communication link, such as a wire 36. The communication link may also be a wireless communication link, such as a radio frequency or infrared link, or may include other elements of a communication network.

The electronic tracking device 34 to be programmed includes a memory portion, such as some form of an electrically erasable programmable read-only memory (EEPROM). The electronic tracking device may also include addressable memory for storing or logging information from the apparatus into which the device is eventually installed. For example, if the electronic tracking device is to be attached to a replaceable module to be installed in a printing apparatus, the addressable memory may receive information from the printing apparatus, such as a count of the number of images the replaceable module has made, or other such changing data relating to the replaceable module or apparatus to which the tracking device is attached. The device programmer 30 writes predetermined, known device information into the memory of the electronic tracking device 34. The exact information to be written into a particular device depends upon the replaceable module or other apparatus to which the tracking device is to be attached, the usage to which the apparatus is to be put, and the information to be gathered or process relating to the tracking device in future operations.

The electronic tracking device 34 is designed for later attachment to some other apparatus, such as a replaceable module for a printing apparatus. The design and construction of the particular electronic tracking device 34 will depend upon the exact intended usage for the device.

A typical electronic tracking device may include connectors, such as pins for placing information onto or removing information from the memory in the tracking device. The device programmer 30 may use the same pins for initially programming device information onto the tracking device 34. Other tracking devices may have wireless interfaces, such as a radio frequency communication element. The wireless interface may be active or passive.

The central processing unit 12 of the programmed computer 10 provides programming information to the device programmer 30 over the communication link 36 to instruct the device programmer 30 to program device information onto the electronic device 34.

The programming system additionally includes a security card reader 40 that is connected to the central processing unit 12 of the programmed computer 10 through a communication link, such as a wire 42. The communication link between the security card reader and the programmed computer 10 may also be a wireless interface, or may pass through other network devices. The security card reader includes a detector 44 for reading information from a security card 46 that is presented to the security card reader. Various types of security cards and security card readers are known to those skilled in the art. The security card detector 44 may be a magnetic detector that reads magnetically encoded security information contained on the security card 46. Alternatively, the detector 44 may be a radio frequency transceiver that activates a radio frequency antenna (not shown) on the security card 46 to cause security information stored on the security card 46 to be read across a radio frequency link to the security card reader 40. The security reader 40 can then transmit the information read from the security card 46 to the central processing unit of the programmed computer 10.

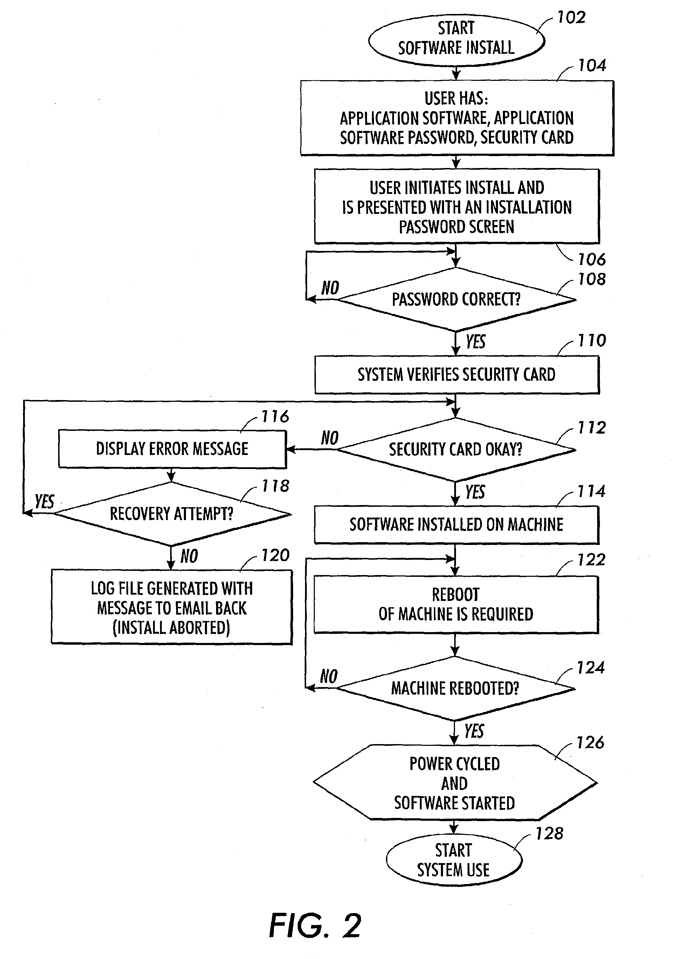

One aspect of controlling the programming of electronic devices is to control the installation of programming software onto the CPU 12 of the programmed computer. Figure 2 is a flow diagram of a representative process of controlling the installation of device programming software onto the programming system. The user starts the software install process 102. When doing so the user possesses the application software. An application software installation password, and an installation security card 104. The user may possess the application software by downloading it across the communication link 22 from an external network, or obtaining it on a removable media, such as a floppy disk, a CD, or DVD that can be read by the removable media drive 20 of the programming system. The installation software may also be received at the programming system as an attachment to an email. An application software installation password is sent separately to the user. For enhanced security, the application software installation password is sent to the user using a delivery mechanism different from the delivery mechanism used for the application software itself. The application software is configured so that it cannot be installed on the computer 10 until the user's installation permissions are verified.

The user initiates 106 the installation of the application software. The installation software causes the computer 10 to present to the user on the display screen 14 an installation password screen instructing the user to enter the installation password. The user enters the installation password using, for example, the keyboard 16. The computer 10 verifies the installation password 108. The installation software may be configured so that the user is permitted only a limited number of unsuccessful attempts to enter the installation password before the installation software refuses to proceed with the installation process. Thus, the application software may be configured so that there is a maximum number of times that the application software will seek to verify that the password is correct.

Another stage in the process verifying that the user has appropriate installation permissions is for the computer to verify a physical installation security device that the user presents to the programming system. The security device may be a key that operates a particular lock in a mechanical fashion, or a security card 46 that has magnetic or electronic installation card information that can be detected by the detector 44 of the card reader 40. The programming system verifies 110 that the installation card information matches the expected information.

Security is assisted because the installation requires, in addition to the software itself, at least one and perhaps two additional security elements, namely the installation password and the physical installation security device, such as the installation security card, to be present at the time of software installation.

Software installation may encompass activating software that is already loaded onto the CPU 12 of the programmed computer 10. If the security card has the correct installation security information, and the installation password is correct, the installation software is installed 114 on the programmed computer 10. If the security card data does not match the expected data, an error message is displayed 116. The system can be programmed to attempt a recovery 118 providing one or more additional times to verify the installation card information on the installation security card. If no recovery attempt is to be made, or if a maximum number of recovery attempts have been made but have been unsuccessful, the installation of the programming software is aborted 120. A log file may be created within the computer 10 to record the unsuccessful installation attempt and/or the computer may transmit a message to a central office reporting that the installation was unsuccessful.

The software may be configured as many application software programs are, to require rebooting of the computer 10 after the software is installed 122. After the machine is rebooted 124, the programming software is made available for use 126, and the programming system can begin using the programming software 128.

The installation of the programming can be configured so that a different installation password and/or a different installation security card code is required for each separate installation of the software. Thus, for example, different password and a different installation security card code can be required for installation of the software on each of plural different programming systems.

The installation of the programming application software on the computer may also include updating certain registry files in the computer operating system with information, such as the date and time of the software installation, the production site code, a software serial number, limits on the number of software installations that can be performed on that particular computer, and other information. Some or all of this information may be stored in an encrypted file at a particular storage location within the computer 10.

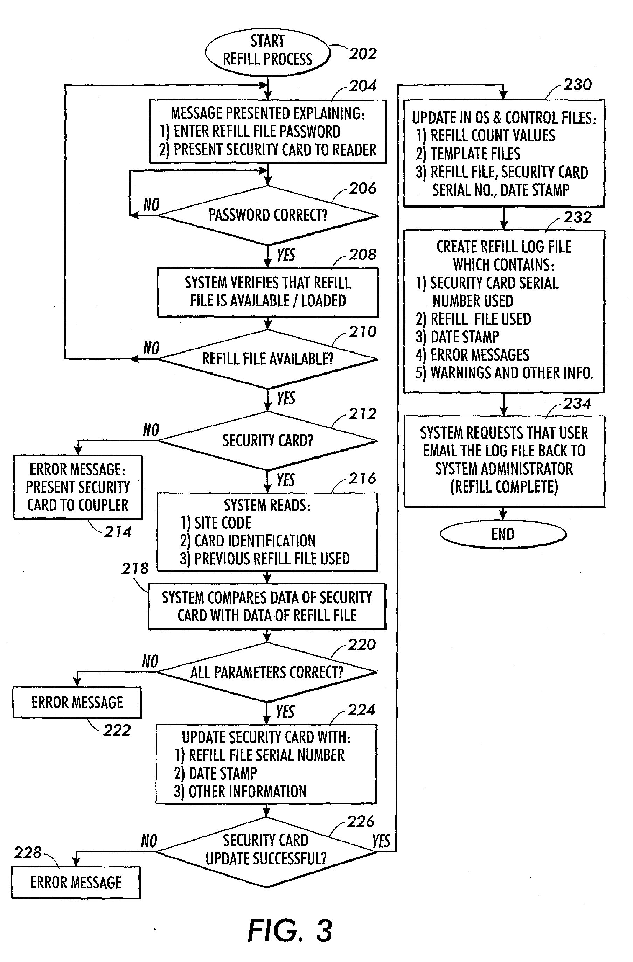

Figure 3 depicts a representative process of refilling the programming system with programming permissions that control the programming of electronic devices 34. One particular usage is to establish a limit on the number of electronic devices that can be programmed by the computer before a new refill of programming permissions must be obtained.

The refill process includes verifying refill permissions to confirm that the user is authorized to establish additional programming permissions in the programming system in accordance with the refill process, and performing the refill process only if the refill permissions are properly authenticated or verified.

Referring now to Figure 3, the user begins the refill process 202, causing the computer 10 to display on the display 14 a request for the refill file password, and/or instructions to present to the security card reader 40 a refill security card. The computer 10 verifies 206 that the password entered by the user is correct. The system may be configured so that a maximum number of incorrect passwords is permitted before the system aborts the refill process. The programming system verifies that a computer file containing the refill information of predetermined programming permissions is available 208. For example, the refill file may be loaded onto the computer 10, but be awaiting activation. Alternatively, the refill file may be contained on a removable media read by the removable media drive 20, or may be received electronically over the communication network through the communication link 22. If the refill file is not available 210, the process can be restarted. If the refill file is available, the programming system can further verify the identity of the user by reading refill card information from a refill security card presented to a card reader 40. The refill security card may be identical to the installation security card, and may even be the same card, with additional refill permissions embedded in the magnetic or electronic information stored on the security card 46.

The programming system polls the security card reader 40 to determine whether a refill security card 46 is present 212. If the security card is not detected, the programming system presents to the user an error message 214, and instructs the user to present the refill security card to the card reader 40. If the card reader detects the presence of a security card, the detector 44 on the security card reader 40 reads 216 the refill security permissions information electronically or magnetically embedded on the refill security card 46. The programming system within the programmed computer 10 additionally verifies its own site code or location, and any previous use of the refill file located in the computer or on the removable media that has been inserted into the removable media drive 20. The programming system can be preset so that only certain predetermined refill security card information is valid for initiating the refill process of programming permissions. Thus, the programming system computer 10 compares 218 the refill card information data and the information or data contained in the refill file. If all the parameters are of the security card refill information and the refill file information are not correct 220, the programming system again displays an error message 222 on the computer display 14. If the parameters are determined to be correct, the refill permissions have been verified, and the refill security card information can be updated 224 with the information from the refill currently being conducted. Such data may include the refill file serial number, the date on which the refill was performed, and other information depending on the system circumstances. The computer 10 can then determine whether the update of the refill card information on the refill security card has been successful 226. If unsuccessful, another error message 228 can be displayed. If the security card update is successful, the computer 10 updates its operating system and control files 230 to establish in one or more storage locations in the computer's central processing unit 12 information about the programming permissions established for the programming system. For example, the authorized number of electronic devices 44 that the refill of programming permissions permit (refill count values) can be stored in one or more memory locations within the computer system. In addition, any required template files for the programming process, as well as file information, refill serial number, installation or refill date can also be stored.

The same information, and additional information, can be established in a second storage location within the computer CPU 12, creating a log file 232. The log file at a second storage location within the computer provides additional control information that can be compared with the control information at the first storage location to assist in verifying such control information has not been altered or corrupted.

In certain circumstances, a remote system administrator may desire that information pertaining to the refill of programming permissions be transmitted. In such circumstances, the computer 10 can cause the display 14 to request the user electronically transmit the contents of the log file to the remote system administrator 234. Other systems may be able to transmit that information directly to the remote system administrator.

Once the programming application software is successfully installed on the computer 10, and the computer is "refilled" with the appropriate programming permissions, the programming system is ready to program device information into individual electronic devices, such as electronic tracking devices for replaceable modules of a printing apparatus.

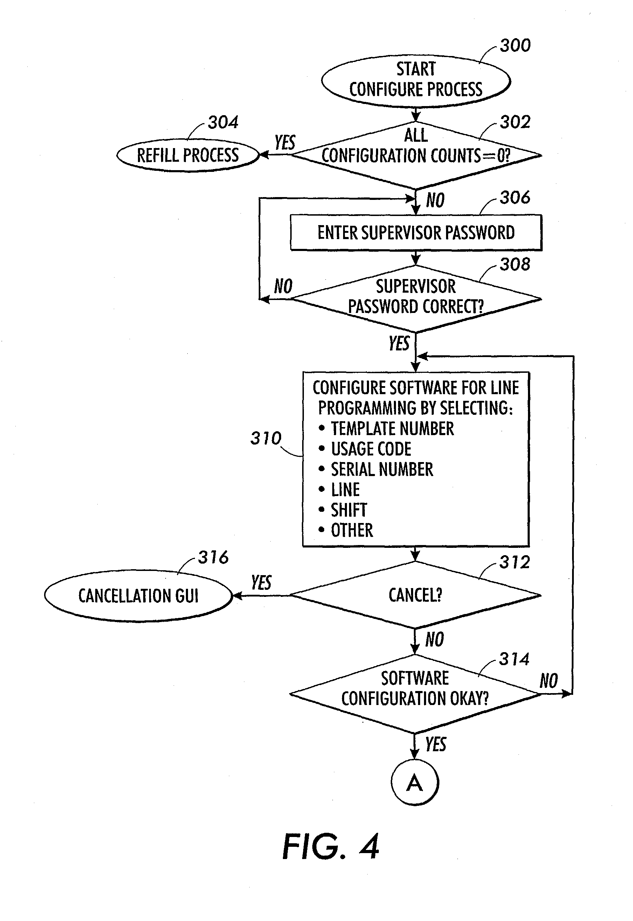

Advanced versions of the programming system can be configured in accordance with the process shown in Figure 4 to allow an on site supervisor to configure the programming of the devices in accordance with the particular devices to be programmed. For example, the programming system may be installed so that the device programmer 30 can program different types of electronic devices. The configuration mode allows an on site supervisor to designate that a particular operator for a particular shift can program devices of only one particular type.

To provide configuration control, the system examines the programming permissions available to determine if one or more programming configurations is within the programming permissions. If no programming configurations have been activated by providing appropriate refills of the programming permissions 302, the programming system reenters the refill mode 304. The refill mode again is shown in Figure 3.

If at least one configuration is available, as indicated by a non-zero entry in the configuration count, the computer 10 requests that the supervisor enter the supervisor password 306. Once the supervisor enters the supervisor password, the computer determines whether the supervisor password is correct 308. The programming system may be arranged so that only a limited number of incorrect passwords are permitted before the system aborts the configuration process.

If the supervisor password is correct, the supervisor is provided the opportunity 310 to enter information into the application software, using the input keyboard 16 and mouse 18 to establish a particular programming template (which may be identified by template number), a usage code to track usage, a serial number for the particular operator, information concerning the programming operation, such as the manufacturing line, the shift, the individual operator identification, and other information desired by the programming supervisor.

The operator is provided with an opportunity 312 to cancel the configuration process. If the configuration process is cancelled, the computer 10 displays a cancellation graphical user interface (GUI) 316 on the display 14. Additional security for the configuration process can be provided by requiring that the supervisor enter the supervisor password a second time after the configuration information has been entered. Following correct entry of the supervisor password, and if the configuration process is not cancelled, the application software embedded in the computer 10 verifies 314 that the configuration entered by the supervisor is correct. If the supervisor cancels the configuration process, or the configuration check are unsuccessful or not correct, the configuration process can be restarted.

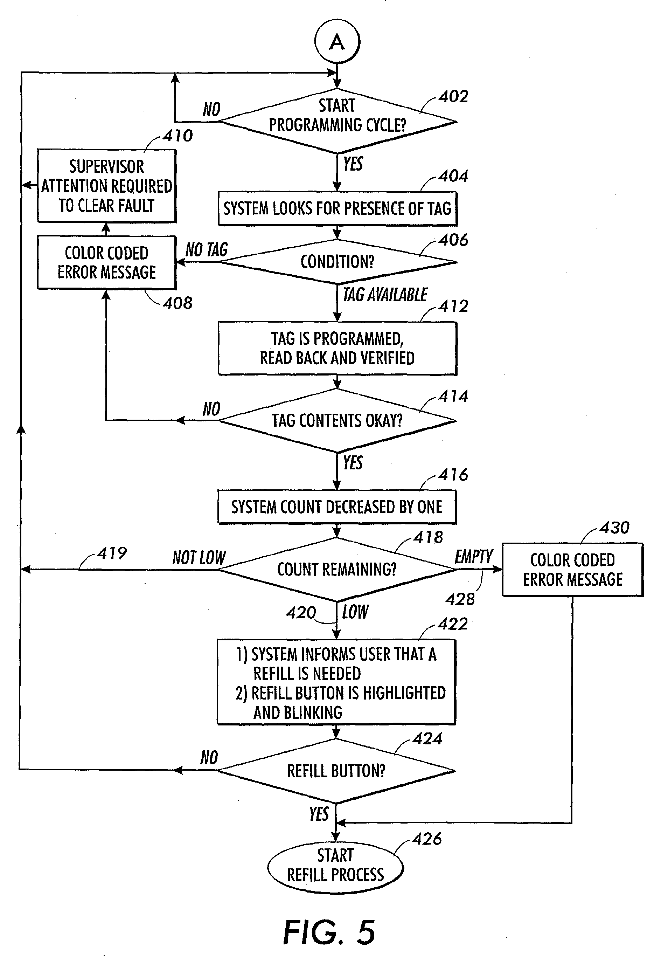

Once the programming process has been configured in accordance with the process shown in Figure 4, actual programming of electronic devices begins, as shown in Figure 5. The process of starting the programming cycle is begun 402. The device programmer 30 of the programming system checks 404 to determine that an electronic device to be programmed is present in the programming receptacle 32. The electronic device can be referred as a tag. If the device programmer does not detect 406 a tag present in the receptacle 32, the programming system generates an error message 408 on the display screen 14. The error message may be color coded to attract the operator's attention to the difficulty. For additional security, the system may be designed so that a supervisor must clear the fault 410 to restart the programming cycle. If the device programmer 30 detects 406 a tag 34, the device programmer 30 programs 412 the tag 34 with device information in accordance with the instructions supplied by the application software, and consistent with the programming permissions programmed into the programming system. The programming system provides additional security to the contents of the device information programmed onto the electronic tracking device 34 by reading 412 from the tracking device the device information just programmed onto the device. The computer 10 compares the device information read from the device with the device information that should have been programmed onto the device 414. If the two sets of device information do not match, an error message is generated 408. The error message may be color coded to facilitate identification by the operator. The application software can be configured so that such an error requires supervisor attention 410 to restart the programming cycle. If the device information read 414 from the device is correct, the programming permissions stored in the programming system are updated 416 to reflect that one additional device has been programmed. In circumstances in which the programming permissions includes a count of the maximum number that can be programmed, the programming count is decremented by decreasing the system count by one.

The programming system determines whether the remaining programming permissions, after they have been updated, permit programming additional devices, so that the programming permissions can be refilled if necessary. In the exemplary embodiment, the programming count is compared with two thresholds 418. If the programming count is not below either threshold 419, so that additional electronic devices can be programmed, the programming cycle can be restarted 402. If the programming count is below is a first threshold 420, the programming system informs the user through the display screen 14 that a programming permissions refill will soon be needed 422. For simplicity of use, a graphical interface can provide a refill button or icon on the display that can be highlighted and caused to be animated or to blink to attract the operator's attention. The operator, using the mouse 18, can click on the refill button 424 to start the refill process 426. The refill process is shown in Figure 3. If the operator does not wish to begin the refill process, the operator can restart the programming cycle, as the count remaining indicates that the programming permissions are sufficient to permit at least one additional programming operation.

If the examination of the programming count 418 determines that the programming count is below a second threshold, lower than the first threshold, and preferably below one, the programming permissions is determined to be empty 428, and the programming system generates an error message 430 to indicate that no further programming may take place until the programming permissions have been refilled. The message informing the operator of this condition may be color coded to assist the operator in identifying the system need.

Thus, prior to restarting the programming cycle, the programming system determines if programming another electronic device is within the remaining or updated programming permissions.

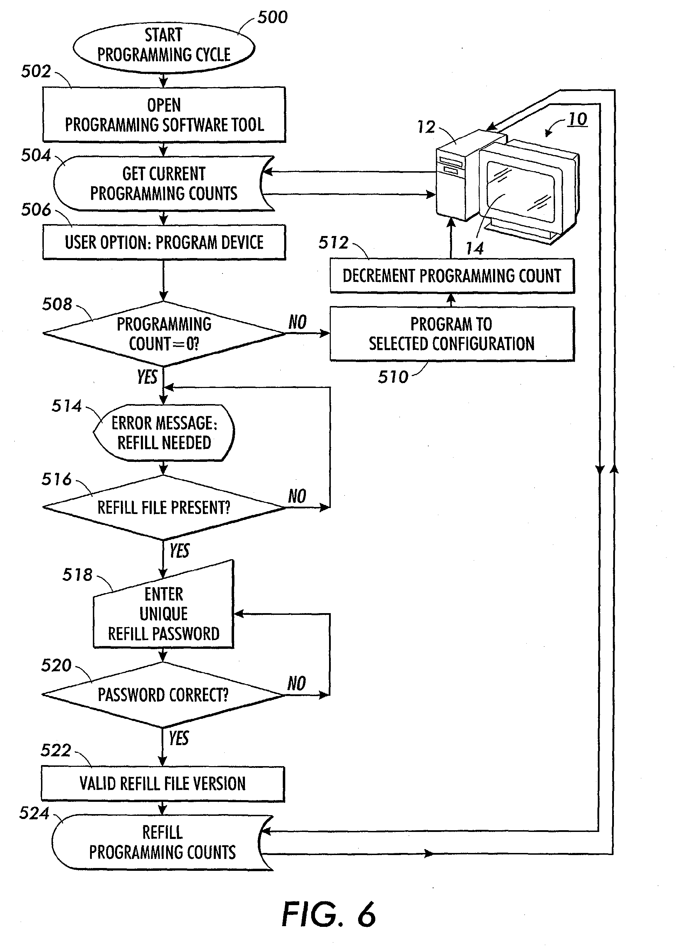

Figure 6 illustrates an alternative process of programming electronic devices, checking that continued programming is within the programming permissions contained on the system, and, if necessary, refilling the programming permissions with additional permissions.

Programming permissions including the current programming counts of the number of devices that can be programmed under the current programming permissions, is stored in an encrypted file and in a system registry and the central processing unit 12 of the programming system computer 10. The user initiates the programming process 500 by opening the programming software tool on the computer 502. The programming software tool verifies that programming at least one electronic device within the programming permissions contained in the programming system by obtaining 504 the current programming counts from both the encrypted file and the system registry of the computer CPU 12. By obtaining the programming counts from both locations, the programming software tool can compare the programming counts (and the broader programming permissions) from the two storage locations. The programming software tool proceeds only if the programming permissions (including the current programming counts) from the two sources are the same. If the programming permissions at the two storage locations differ, such differences may indicate tampering with the programming permissions. Operation of the programming software tool can then be aborted.

If the programming permissions agree, the user has the option of initiating the programming of an electronic device 506. The implementation illustrated uses a decrementing programming count to determine if additional electronic devices can be programmed. If the programming count 508 is greater than zero 508, the programming system programs the electronic device to the selected configuration specified in the programming system 510. Upon the programming of the electronic device, the programming count in the encrypted file and the system registry of the computer 10 are both decremented 512 by one to update the programming permissions to reflect that an electronic device has been programmed.

If upon initiating the process of programming a device 506, the programming count 508 is equal to zero, the programming permissions in the programming system have been exhausted, and a refill of the programming permissions is required. The programming system displays on the user interface screen 14 an error message 514 indicating that a refill of the programming permissions is needed. The programming system determines 516 whether a refill file is present in the system that can be used to refill or refurbish the programming permissions. If the refill file is present, an operator authorized to activate the refill file enters a unique refill password 518. The operator authorized to activate the refill file may be different than the operator authorized to program individual electronic devices. For example, authority to activate the refill file may be limited to shift supervisors or department managers. The programming system verifies 520 that the refill password is correct. The programming system may be configured so that only a limited number of attempts to enter the unique refill password are permitted before the programming software tool aborts the attempted refill process.

If the unique refill password is correct, the programming system may provide additional security for the refill process by verifying 522 that the refill file version detected as present on the system is valid and correct for that particular programming system. With the correct refill file version and the appropriate security password entered indicating and verifying the identity of the refill permissions granted, the programming permissions are reset in the computer 10. If the programming permissions are stored at multiple storage locations in the computer, such as an encrypted file and in a system registry, the programming permissions (including the programming count) at all such storage locations are refilled 524.

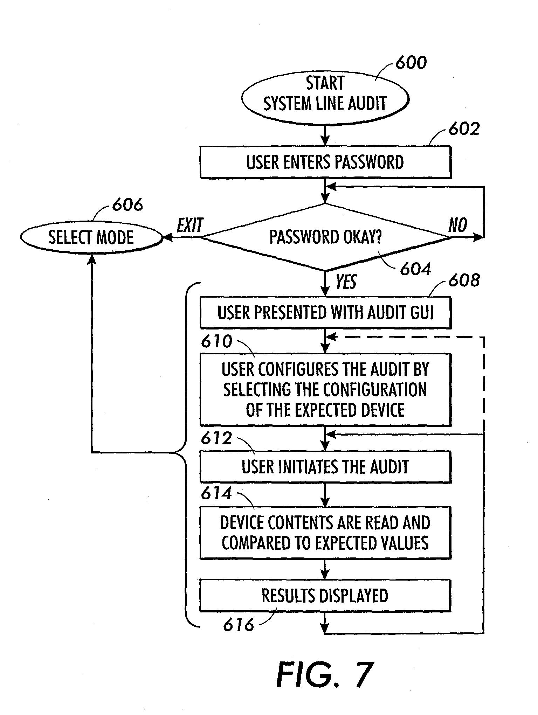

Security of the process of programming electronic devices is enhanced by providing an "audit model" to operation of the programming system. An exemplary audit mode is illustrated in Figure 7. An operator or user authorized to perform the auditing process activates 600 the audit mode of the programming system. The programming system prompts the operator to enter an audit password 602. The programming system verifies the audit user and the audit user has the appropriate user audit permissions to perform the audit function by verifying the password entered by the user 604. In this mode also, the programming system may be configured to permit only a limited number of incorrect passwords before aborting the process. The programming system may also be configured to provide the user an option to exit the audit mode at this point and return to a mode selection step 606 at which the user can select from among the various other modes, such as programming the electronic devices or refilling the programming permissions. If the user continues with the audit mode, and the programming system has verified the audit password, the user is presented with an audit interface 608, such as a graphical user interface on the system display 14. Using the graphical user interface, the keyboard 16 and the mouse 18 (Figure 1), the user can audit by selecting 610 the configuration of the electronic device that has previously been programmed.

The audit mode allows an audit user to verify that the programming system has correctly programmed the device information into an electronic device 34. The audit mode may be performed with a just programmed electronic device 34 remaining in the programming receptacle 32, or it may be performed later by inserting a previously programmed electronic device 34 into the device programming receptacle 32. If a particular installation contains multiple programming systems that are commonly programmed with the programming software tool, a previously programmed electronic device 34 can be audited on a different programming system.

Once the audit user has configured the audit by selected the configuration of the device information expected to be found on the electronic device, the user initiates the audit 612. The audit portion of the programming software tool reads from the electronic device 34 the device information programmed into it, and compares that device information with the expected values 614, namely the device information expected to be contained in the electronic device after programming by the programming system. The results of the comparison are displayed 616 on the user interface screen 14. The results may be displayed in a simplified manner, such as providing one easy to identify display for a positive comparison, a different display for a negative comparison, and in some cases, a third display indicating some type of a communication or other system error. For example, a positive comparison can produce a green indicator on the display, a negative comparison a red indicator, and a system error a black indicator on the display 14.

Throughout the audit process, the user may have the option to either exit the audit mode and return to a mode selection stage 606, or may return to the configuration step 610 to configure a different type of audit for a particular electronic device, or to begin a new series of audits by altering the configuration of the audit process.

The user also has the option to return to the audit initiating stage 612 to begin the same audit process. For example, the user may wish to double check a particular electronic device, or more commonly, to begin the audit process for a different electronic device that is inserted into the device receptacle 32.

The order of the specific steps in the individual processes may be varied. In addition, not all systems will necessarily need all stages of the programming process. Additional steps and additional security measures for verifying the identity of the operators of the system and for verifying the integrity of the programming system and the programming process may be added to those described herein without departing from the invention.

## Claims

1. A method of programming one or more electronic devices with device information, the method comprising:
installing device programming software onto a programming system, wherein the installing comprises:
verifying installation permissions; and
installing programming software onto the programming system only if the installation permissions are verified;
refilling the programming system with programming permissions, wherein the refilling comprises:
verifying refill permissions; and
establishing predetermined programming permissions in the programming system only if the refill permissions are verified; and
programming electronic devices, wherein the programming comprises:
determining if programming an electronic device is within the programming permissions of the programming system;
detecting the presence of an electronic device to be programmed; and
if programming an electronic device is within the programming permissions and an electronic device is present, using the programming software to program device information onto the electronic device.

2. The method of claim 1, wherein verifying installation permissions comprises:
reading installation card information from an installation security card; and
electronically verifying that the installation card information contains a predetermined installation security code.

3. The method of claim 1 or claim 2, wherein verifying refill permissions comprises:
reading refill card information from a refill security card; and
electronically verifying that the refill card information contains a predetermined refill security code.

4. The method of claim 3, wherein verifying refill permissions further comprises:
entering a refill password into the programming system; and
verifying in the programming system the refill password.

5. The method of claim 3 or claim 4, wherein establishing predetermined programming permissions comprises supplying to the programming system refill information and determining from the refill information programming permissions.

6. The method of any of claims 1 to 4, wherein establishing programming permissions in the programming system comprises encrypting the programming permissions.

7. The method of claim 8, wherein:
establishing predetermined programming permissions in the programming system comprises establishing a control portion of the programming permissions in two storage locations in the programming system;
updating the programming permissions comprises updating the control portion of the programming permissions in both of the two storage locations; and
determining if programming an electronic device is within the programming permissions comprises examining from the two storage locations the control portion of the programming permissions.

8. A programming system for programming electronic printer module tracking devices, the system comprising:
a security card reader for receiving a security card;
a programmed computer;
wherein the security card reader is connected to the programmed computer; and
a device programmer connected to the programmed computer for programming electronic devices with device information in response to instructions from the programmed computer;
wherein the programmed computer is programmed with programming permissions that include a maximum number of electronic devices into which the programmed computer is authorized to program the device information;
wherein the programmed computer is programmed to receive a refill file to refill the maximum number of electronic devices that the programming system is permitted to program through the device programmer; and
wherein the programmed computer is programmed to install the refill file only if the security card presented to the security card reader contains authorized refill permissions.

9. The programming system of claim 8, wherein:
the programmed computer comprises first and second storage locations; and
the programmed computer is programmed to store the maximum number in both the first and second storage locations.

10. The programming system of claim 8 or claim 9, wherein the programmed computer is programmed to encrypt the maximum number stored at the first storage location.
